# EUROPEAN PATENT SPECIFICATION

(11) **EP 4 357 210 B1**
(45) Date of publication and mention of the grant of the patent: **23.09.2026**
(21) Application number: 22202460.6
(22) Date of filing: 19.10.2022
(51) Int. Cl.: B60T 17/00, B60T 17/02, B60T 17/22

(54) **INFORMATION PROCESSING SYSTEM FOR AN ELECTRONIC AIR TREATMENT DEVICE FOR A VEHICLE**
INFORMATIONSVERARBEITUNGSSYSTEM FÜR EINE ELEKTRONISCHE LUFTAUFBEREITUNGSVORRICHTUNG FÜR EIN FAHRZEUG
SYSTÈME DE TRAITEMENT D'INFORMATIONS POUR UN DISPOSITIF ÉLECTRONIQUE DE TRAITEMENT D'AIR POUR UN VÉHICULE

(43) Date of publication of application: 24.04.2024
(73) Proprietor: KNORR-BREMSE Systeme für Nutzfahrzeuge GmbH, 80809 München (DE)
(72) Inventor: SERSLI, Adam, 2092 Budakeszi (HU); RATATICS, Gabor, 6034 Helvecia (HU); TOTH, Zoltan Laszlo, 6100 Kiskunfélegyháza (HU); OLAH, Tibor, 6000 Kecskemét (HU); POLYAK, Tibor, 6044 Hetényegyháza (HU)

(56) References cited:
- WO-A1-2007/045318
- WO-A1-2019/238465
- WO-A1-2020/193077
- DE-A1- 102010 038 064

## Description

The present invention relates to an information processing system for a vehicle, especially utility vehicle, comprising at least one terminal device, at least one electronic air treatment device comprising at least one storage device for storing at least one device information indicative of at least one operation condition and/or at least one identity of the electronic air treatment device, and at least one server device.

In the field of vehicles and especially utility vehicles, usually pneumatic systems are used for brakes, suspension and other auxiliary systems, wherein the distribution of the air is handled by the electronic air treatment device having an air dryer unit and a multi-circuit protection valve that can divide the air provided by a compressor or the like, and can handle the different opening and closing pressures, the pressure limitation of each circuits, and the circuit protection.

Before the pressurized air may be controlled this way, an important measure is to dry this air (as it still contains humidity of the atmosphere) provided by the compressor. This drying procedure is established by an air dryer unit being arranged between the compressor and the multi-circuit protection valve such that dried and de-oiled air is provided to the multi-circuit protection valve. Especially, it is important that the electronic air treatment device should always be matched with the appropriate air dryer unit (that is a releasably mounted wear part) such that unintended used air dryer units in form of forged or otherwise inappropriate dryer units may be effectively avoided.

Such electronic air treatment devices and associated air dryer units or cartridges are already known in the prior art.

EP 3549836 A1 relates to a method for controlling an air processing system of a vehicle. The method comprises the steps of: determining the temperature associated with said purge valve by means of temperature determination means; and if said temperature is below a predetermined temperature value, performing regeneration after a compressor activation event so that moist in connection to said purge valve is removed.

EP 3576994 A1 discloses an interface element for a vehicle comprising electronic components, the electronic components having at least one connection to at least one data interface of a vehicle, the connection being suitable and provided for the exchange of measurement data and/or control and/or regulation data for the regulation of electronic components, the electronic components further having at least one integrated measurement and/or control and/or regulation unit.

WO 2019238465 A1 discloses a system comprising an air dryer unit for an air treatment installation of a vehicle and an electronic counter, wherein the air treatment installation and/or the air dryer unit has an electronic memory module, said electronic memory module having a memory space, and wherein a counter information can be stored in the memory space, on the basis of which the usage state of the air dryer unit can be read out, and wherein an operating cycle of the air dryer unit is detectable by means of the electronic counter, wherein a counting signal can be generated on the basis of the detection, and the counting signal can be transmitted to the electronic memory module for storing as counting information.

According to the prior art, it is still inconvenient for the user of a vehicle to confirm if a proper or original air dryer cartridge is mounted to the air treatment device or to get further information of the current operation condition of the air treatment device.

It is therefore an object of the present invention to improve an information processing system as mentioned above, in particular in that this system is simplified in structural, functional terms, is enhanced in security terms and that the usability for a user is enhanced, more intuitive and simplified.

This object is solved according to the present invention with an information processing system according to the features of claim 1. Correspondingly, an information processing system for a vehicle, especially utility vehicle, comprising at least one terminal device, at least one electronic air treatment device for providing treated and compressed air for at least one pneumatic system for the vehicle, wherein the electronic air treatment device comprises at least one storage device for storing at least one device information indicative of at least one operation condition and/or at least one identity of the electronic air treatment device, and at least one internal and/or external server device, wherein the terminal device is configured to capture the device information from the storage device, and wherein, if said device information is transmitted to the server device via the terminal device, the server device is configured to check said device information and/or the terminal device is configured to check said device information by comparing said device information with at least one corresponding device information of the electronic air treatment device initially stored within the server device and/or the terminal device.

The invention is based on the basic idea that an information processing system is provided with an internal and/or external server device, which is configured to check said device information by comparing said device information with at least one corresponding device information of the electronic air treatment device initially stored within the server device. Alternatively or additionally, the terminal device is also configured to check said device information by comparing said device information with at least one corresponding device information of the electronic air treatment device initially stored within the terminal device. In other words, the invention provides a possibility for a traceability for usage of the proper filter cartridge on the vehicle, for a digital feedback about a potential improper filter cartridge usage, and for application/service lifecycle of a filter cartridge. In this regard, corresponding device information indicative of at least one operation condition and at least one identity of the electronic air treatment device are stored in the server device and/or the terminal device such that a check of the current device information of the air treatment device is possible continuously as to the wish of the user of the vehicle. The device information correspond to data in the form of some specific information of the electronic air treatment device such as a serial number, a characteristic date (such as the production date), and/or lifetime data (current number of regeneration cycles and a threshold value of regeneration cycles). The air treatment device is configured (via appropriate pressure, humidity, and temperature sensors) to capture the number of its regeneration cycles, merge these lifetime information/data with the device information and store

these on the storing device. Thus, these continuously updated and saved device information then may be captured by the terminal device and transmitted to the server device. There, this device information is/are compared with at least one corresponding device information of the electronic air treatment device initially stored within the server device such that a check is possible in real-time and whenever the user intends to perform such a check. An internal server device may provide very short, fast and efficient transmittal ways, wherein an external server device may be more cost-efficient for example. The internal server device may be understood in this way that this server device may be internally used by the user, maintenance staff and/or manufacturer of the at least one electronic air treatment device only and/or such that this server device may be located within respective facilities of the user and/or manufacturer as an own property. The external server device may be understood in this way that this server device may be externally used by the user, maintenance staff and/or manufacturer of the at least one electronic air treatment device (but without unauthorized external access of third parties) and/or such that this server device may be located externally with regard to facilities of the user, maintenance staff and/or manufacturer. For example, the external server device may be provided by an external provider and this server device is rented by the user, maintenance staff and/or manufacturer of the at least one electronic air treatment device. As said before, such a check is also or alternatively possible just locally on the terminal device. In this regard a very simple and cost-effective check of the electronic air treatment device is provided resulting in an enhanced user-friendliness, a better surveillance, and a better operation safety of the air treatment device resulting in a higher entire vehicle safety. The vehicle is formed as a utility vehicle. The storage device may be formed as a storage being suitable for non-volatile or volatile storing of the device information. The storage device may be formed as an optical code (such as a barcode or QR-code), as a non-volatile read-only-storage device or its sub-types such as erasable programmable read-only memory (EPROM), electrically erasable programmable read-only memory (EEPROM) and flash memory that can be erased and re-programmed. Alternatively or additionally, the storage device may also comprise a volatile Random-access memory device such as a SRAM or DRAM storage device.

In this context, the terminal device may comprise or may be formed by at least one mobile terminal device or may comprise or may be formed by at least one stationary or fixed terminal device. This mobile configuration enables a very handy and fast use for the user of the terminal device. The mobile terminal device may be formed by a tablet computer or a smartphone or any other suitable terminal for capturing the device information. The stationary or fixed terminal device may have the advantage that it may be integrated in a workshop-infrastructure for vehicles, especially utility vehicles, such that a reliable and fast use of this device may be established.

Further, the server device may comprise or may be formed by at least one cloud computing platform, client-server, dedicated-server, shared-server, host-server, external-server, internal-server, software-server, hardware-server, application-server, database-server, file-server, mail-server, print-server, proxy-server, backend-server and/or terminal-server and/or especially any other server. The cloud computing platform or any other forms of server or servers as mentioned above (the internal and/or external server device for example) alone or in combination may have several advantages, especially with regard to flexible use cases and cost-efficient solutions and device-, time- and location-independent access to geographically distributed IT resources of the cloud computing platform or the other forms of server devices.

According to the invention, it is provided that the electronic air treatment device comprises at least one first air treatment unit and at least one second air treatment unit, especially at least one air dryer cartridge, releasably mounted to the first air treatment unit, wherein the storage device comprises at least one first storage unit attached to the first air treatment unit for storing at least one first unit information indicative of at least one operation condition and at least one identity of the first air treatment unit, and wherein the storage device further comprises at least one second storage unit attached to the second air treatment unit for storing at least one second unit information indicative of at least one operation condition and at least one identity of the second air treatment unit. According to this configuration of the electronic air treatment device, the second air treatment unit is formed by at least one air dryer cartridge. The first air treatment unit may comprise essential devices known in the art, such as a multi-circuit protection valve, an electronic control unit ECU, corresponding electric and pneumatic connections, and pneumatic operating circuits of the utility vehicle, a trailer control module, and parking brake module etc. This configuration enables an enhanced and detailed capturing of the operation and identity information of the first air treatment unit as well as the second air treatment unit. Especially, the provision of two separated storage units enable the storing of different and specific unit-related information (for example the humidity information may only be stored within the second storage unit) such that a more precise data basis of the entire electronic air treatment device may be derivable.

The terminal device is configured to capture the first unit information and the second unit information and is further configured to merge the first unit information and the second unit information into the device information. The merging of the first unit information and the second unit information into the device information defines a very effective way to combine these two types of separately captured information such that the data size may be reduced resulting in a higher data or information transfer rate. In this regard, the user always has the possibility to verify the operation condition of the electronic air treatment device that, especially relating to the air dryer unit, is of high importance as this unit is a wear part that should be changed within the recommended maintenance cycles by the manufacturer. For example, a blocked air dryer unit could cause severe safety issues of the electronic air treatment device resulting in an improper or completely lost air provision of the vehicle such that important air consumers such as the brakes of the vehicle would not work properly anymore.

Moreover, the terminal device is alternatively configured to transmit said first unit information and said second unit information to the server device, which is configured to merge the first unit information and the second unit information into the device information. In case of the alternative separate transmittal of the first and second unit information (without merging by the terminal device), internal power resources of the mobile device may be saved resulting in a higher processing speed of the first and second unit information. In case of the additional transmittal of the separate first and second unit information (together with the merged information), a redundant data transfer may the provided resulting in a higher data saving security.

Further, it is thinkable that the server device is configured to create at least one feedback information in answer to the comparing of said device information and said corresponding device information and is further configured to transmit the feedback information to the terminal device. With regard to the comparing of the device information captured and provided by the terminal device and the corresponding device information (originally stored in the server device for example during or after the production process of this device), a comparison of the data contained in the device information (e.g. the serial number, the characteristic date such as the production date, lifetime data or information with an initial value of e.g. zero, and/or a control number) is effectively provided. This comparison may be performed partly (for example by comparing only the two serial numbers) or completely (by comparing the whole device information respectively) based on the available data in the device information. The result of this comparison, i.e. the feedback information, contains further pairing data or information regarding the pairing status of the first and second air treatment units (for example: pairing OK or pairing NOT OK). In other words, the cloud computing platform is configured to proof, based on the device information if the pairing of the first and second air treatment unit is valid (status: OK) or invalid (status: NOT OK).

In addition, it is conceivable that the terminal device is configured to create at least one feedback information in answer to the comparing of said device information and said corresponding device information. In this case, said information just have to be stored and processed locally on the terminal device (via an APP) that has advantages in case of reaction times of a query of the feedback information. For example, the terminal device is configured to show directly (via its display) to a user if the pairing of the first and second air treatment unit is valid (status: OK) or invalid (status: NOT OK).

Further, it is imaginable that the terminal device is configured to transmit the feedback information to the first storage unit and/or to the second storage unit. This transmittal further enhances the security options of the electronic air treatment device as, depending on the pairing status and/or data of the first and second air treatment units, a positive or negative feedback signal may be generated by the ECU of the electronic air treatment device and stored partly or completely into the storage units. This feedback signal then may be used for further processing of one or more control units of the vehicle being connected with the ECU of the electronic air treatment device. Also, the maintenance of the vehicle is simplified since the stored feedback signal may be picked up by an external electronic maintenance device.

In addition, it is conceivable that the terminal device is configured to transmit the feedback information to at least one communication interface of the vehicle. Compared to the transmittal of the feedback information to the first storage unit and/or to the second storage unit, this type of transmittal enables a fast, direct and wireless communication with the vehicle such that an enhanced communication path is provided and the feedback information may be processed fast, directly, and reliably by the vehicle.

Especially, it is possible that the first air treatment unit and/or the second air treatment unit is/are connectable, via at least one wireless and/or wired connection, to at least one data BUS system of the vehicle and is/are further configured to transmit the feedback information to the data BUS system. Data bus systems are widely used and established in vehicle environments such that a very safe and reliable data interface, that is installed in the vehicle anyway, may be used to transmit the feedback information to this infrastructure of the vehicle. Thus, the positive or negative feedback signal generated by the ECU of the electronic air treatment device may be transmitted to the corresponding systems of the vehicle very effectively. Due to the wireless and/or wired connection a very flexible and adaptable data infrastructure may be established.

Furthermore, it is thinkable that, via the data BUS system, the feedback information is transmittable to at least one display device arranged at least one dashboard of the vehicle. This measure further increases the overall safety of the vehicle as the user or driver may stop the vehicle immediately if a wrong or wrongly mounted or forged air drying unit is mounted to the electronic air treatment device.

Also, it is conceivable that the terminal device and/or the electronic air treatment device and/or the server device and/or the communication interface are connectable to each other via at least one wired and/or wireless connection. This wireless connection at least partially enables a location-independent use of the information processing system, which increases the degrees of freedom of how to establish and use this system. Especially with regard to the server device in the form of a cloud computing platform, a very flexible, cheap and efficient system may be implemented. The wired connection enables a very reliable and secure connection interface.

Moreover, it is possible that the wireless connection comprises at least one NFC connection and/or Bluetooth connection and/or WiFi connection and/or RFID connection. These types of connections enable a flexible and needs-based connection options between the different parts of this system such that a very reliable, flexible and efficient system may be implemented.

Further details and advantages of the present invention shall now be disclosed in at least one embodiment according to the invention in connection with the drawings.

It is shown in
- Fig. 1: a schematic view of a first embodiment of an information processing system according to the invention;
- Fig. 2: a schematic view of a second embodiment of an information processing system according to the invention; and
- Fig. 3: a schematic view of a third embodiment of an information processing system according to the invention.

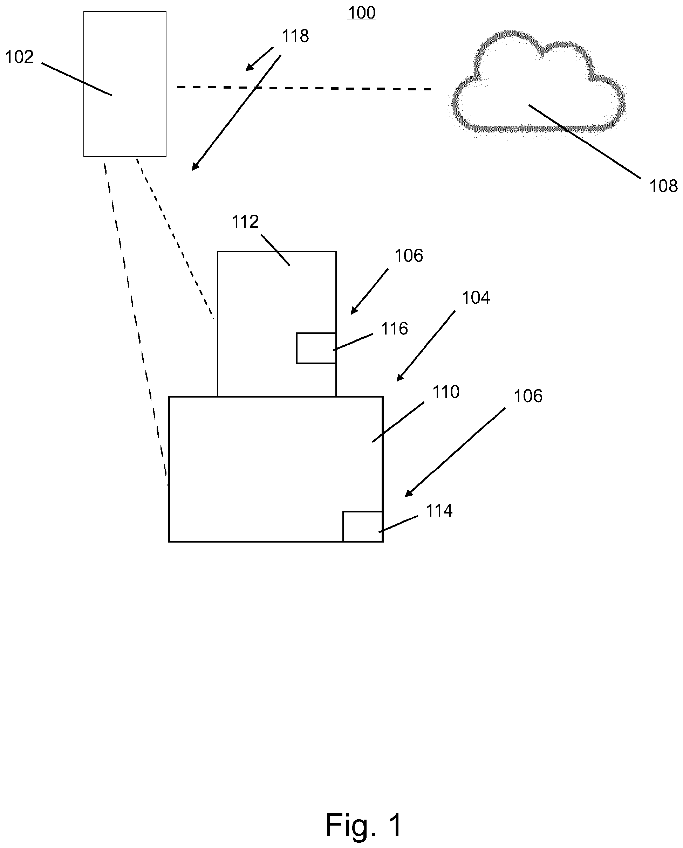

**Fig. 1** shows a schematic view of a first embodiment of an information processing system 100 according to the invention.

The information processing system 100 for a utility vehicle (not shown in Fig. 1), comprises a terminal device 102 that may be formed as a mobile terminal device 102 such as a smartphone or a tablet computer or any other suitable mobile terminal.

Alternatively, the terminal device 102 may be formed as a stationary device being arranged in a truck workshop.

Further, the system 100 comprises an electronic air treatment device 104 for providing treated and compressed air for a pneumatic system for the utility vehicle.

Additionally, the electronic air treatment device 104 comprises a first air treatment unit 110 and a second air treatment unit 112 in the form of one air dryer cartridge releasably mounted to the first air treatment unit 110.

The first air treatment unit 110 comprises essential devices known in the art, such as a multi-circuit protection valve, an electronic control unit ECU, corresponding electric and pneumatic connections, and pneumatic operating circuits of the utility vehicle, a trailer control module, and parking brake module etc.

Further, the electronic air treatment device 104 comprises a storage device 106 for storing device information indicative of one or more operation conditions and one or more identities of the electronic air treatment device 104.

The storage device 106 itself comprises a first storage unit 114 attached to the first air treatment unit 110 for storing first unit information indicative of one or more operation conditions and an identity of the first air treatment unit 110.

The storage device 106 further has a second storage unit 116 attached to the second air treatment unit 112 for storing second unit information indicative one or more operation conditions and an identity of the second air treatment unit 112.

Additionally, the system 100 comprises an internal or external server device 108.

Additionally or alternatively, the system 100 may comprise an internal and external server device 108.

The server device 108 is established as a cloud computing platform 108.

The cloud computing platform 108 may be built up as an Infrastructure as a Service (laaS).

Alternatively or additionally, the cloud computing platform 108 may be built up as a Platform as a Service (PaaS) and/or Software as a Service (SaaS) and/or Function as a Service (FaaS).

Other forms of server devices 108 such as a client-server, dedicated-server, shared-server, host-server, external-server, internal-server, software-server, hardware-server, application-server, database-server, file-server, mail-server, print-server, proxy-server, backend-server and/or terminal-server are also conceivable. Additionally or alternatively, any other kind of a server or servers are also conceivable.

The terminal device 102 and the electronic air treatment device 104 may be connected to each other via a wireless connection 118.

This wireless connection 118 may be established by a radio connection.

In this regard, the wireless connection 118 between the terminal device 102 and the electronic air treatment device 104 may be established as a NFC connection, Bluetooth connection or WiFi connection for transmitting the device information.

Accordingly, both the terminal device 102 and the electronic air treatment device 104 may comprise suitable wireless interfaces (not shown in Fig 1) for NFC connection, Bluetooth connection or WiFi connection.

Further, it is also possible that the first and second air treatment units 110, 112 communicate to each other via the wireless interfaces.

Alternatively, the terminal device 102 may also comprise an optical interface such as an optical camera for capturing the device information from the electronic air treatment device 104.

In this case, the first storage unit 114 and/or the second storage unit 116 may be formed as a non-volatile optical code element such as a barcode or a QR-code.

It is also conceivable that, for example, the first storage unit 114 is an electronic storage unit such as a ROM or RAM storage element and the second storage unit 116 is a non-volatile optical code element as described above or vice versa.

The terminal device 102 and the cloud computing platform 108 may also be connected to each other via a wireless connection 118.

In this regard, the wireless connection 118 between the terminal device 102 and the cloud computing platform 108 may be established as a WiFi or another suitable internetbased connection (such as LTE) for transmitting the device information.

Accordingly, both the terminal device 102 and the cloud computing platform 108 may comprise suitable wireless WiFi or other interfaces for mutual connection.

The function of the information processing system 100 according to Fig. 1 is as follows:
As depicted in Fig. 1, the terminal device 102 is configured to capture the device information from the storage device 106 and transmit said device information to the cloud computing platform 108.

Based on the establishment of the storage device 106 (see above), the terminal device 102 either is configured to capture the device information from the electronic air treatment device 104 by the NFC connection, Bluetooth connection or WiFi connection and corresponding interfaces for transmitting the device information.

Alternatively, the terminal device 102 is also configured to capture the device information optically by the optical interface such as the optical camera.

After having received the device information, the cloud computing platform 108 is configured to check said device information by comparing said device information with corresponding device information (originally stored in the cloud computing platform for example during or after the production process of this device) of the electronic air treatment device 104 initially stored within the cloud computing platform 108.

Alternatively or additionally, after capturing the device information, the terminal device 102 is configured to check said device information by comparing said device information with at least one corresponding device information (originally stored in the terminal device for example during or after the production process of this air treatment device 104) of the electronic air treatment device 104 initially stored within the terminal device 102.

The device information correspond to data in the form of some specific information of the electronic air treatment device 104 such as a serial number, a characteristic date (such as the production date), manufacturer, manufacturing place, lifetime data (number of regeneration cycles and a number of a maximum of regeneration cycles for example) and/or a control number (depending on further data).

The electronic air treatment device 104 is configured (via appropriate pressure, humidity, and temperature sensors) to capture the number of its regeneration cycles, merge these lifetime information/data with the device information and store these on the storage device 106.

As may be depicted from Fig. 1, the electronic air treatment device 104 comprises the first and second air treatment units 110, 112 having a first and second storage units 114, 116.

In this way, that first unit information of the first air treatment unit 110 such as a serial number, a characteristic date (such as the production date), lifetime data (number of current regeneration cycles and a threshold of a maximum of regeneration cycles for example) or information with an initial value of e.g. zero, and/or a control number (depending on further data) may be stored in the first storage unit 114 and may be updated accordingly (in the case of a suitable first storage unit 114) by changing lifetime data for example.

Accordingly, the second unit information of the second air treatment unit 112 comprise corresponding unit information as the first unit information as mentioned above.

Therefore, the terminal device 102 is configured to capture the first unit information and the second unit information and is further configured to merge the first unit information and the second unit information into the device information before transmittal to the cloud computing platform 108.

Additionally or alternatively, the terminal device 102 is also configured to transmit said first unit information and said second unit information to the cloud computing platform 108, which is then configured to merge the first unit information and the second unit information into the device information and process the device information as described below.

In this regard, the cloud computing platform 108 is configured to create feedback information in answer to the comparing of said device information and said corresponding device information.

After having compared these information, the cloud computing platform 108 is further configured to transmit the feedback information to the terminal device 102, where these information may be outputted to a user.

Alternatively or additionally, the terminal device 102 is configured to create at least one feedback information locally by itself in answer to the local comparing of said device information and said corresponding device information that have been locally stored on the terminal device 102.

The result of this comparison, i.e. the feedback information, contains further pairing data or information regarding the pairing status of the first and second air treatment units 110, 112 (for example: pairing OK or pairing NOT OK).

Thus, the cloud computing platform 108 is also configured to proof, based on the device information, if the pairing of the first and second air treatment unit 110, 112 is valid (status: OK) or invalid (status: NOT OK).

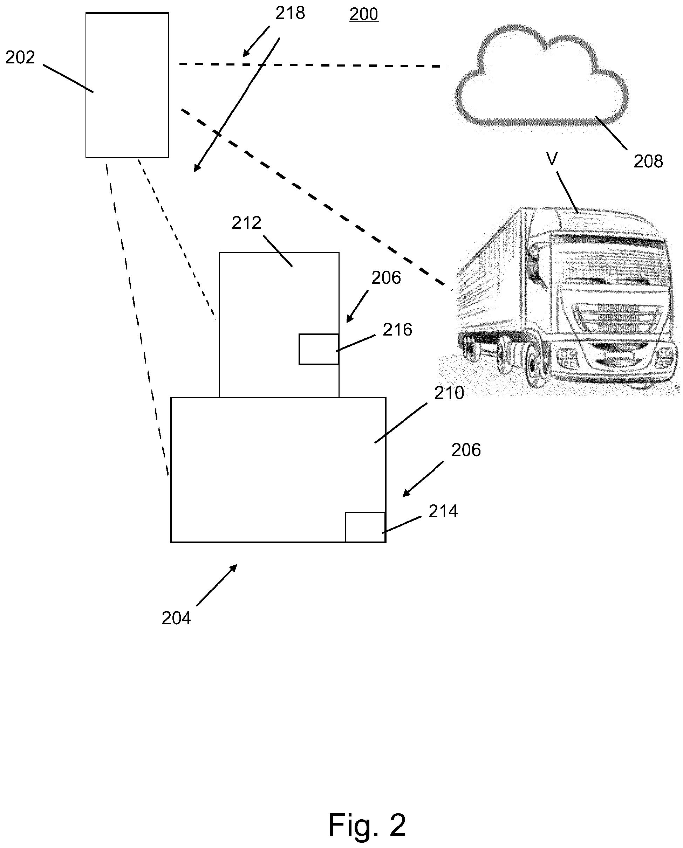

Fig. 2 shows a schematic view of a second embodiment of an information processing system 200 according to the invention.

The second embodiment of the information processing system 200 substantially comprises the same structural and functional features as the first embodiment of the information processing system 100 according to Fig. 1.

But, the following structural differences should be discussed:
Additionally, the terminal device 202 is further connected to a suitable NFC, WiFi or Bluetooth communication interface of the vehicle V via a NFC, Bluetooth or WiFi connection.

The function of the information processing system 200 is as follows:
By the additional communication interface, the terminal device 102 is configured to transmit the feedback information the communication interface of the vehicle V such that one or more control units of the vehicle V may process the feedback information.

A processing could be this way that the pairing status or further information as mentioned above of the first and second air treatment units 110, 112 are storable in an error memory of the vehicle V being accessible during a maintenance procedure of the vehicle V and/or its pneumatic system.

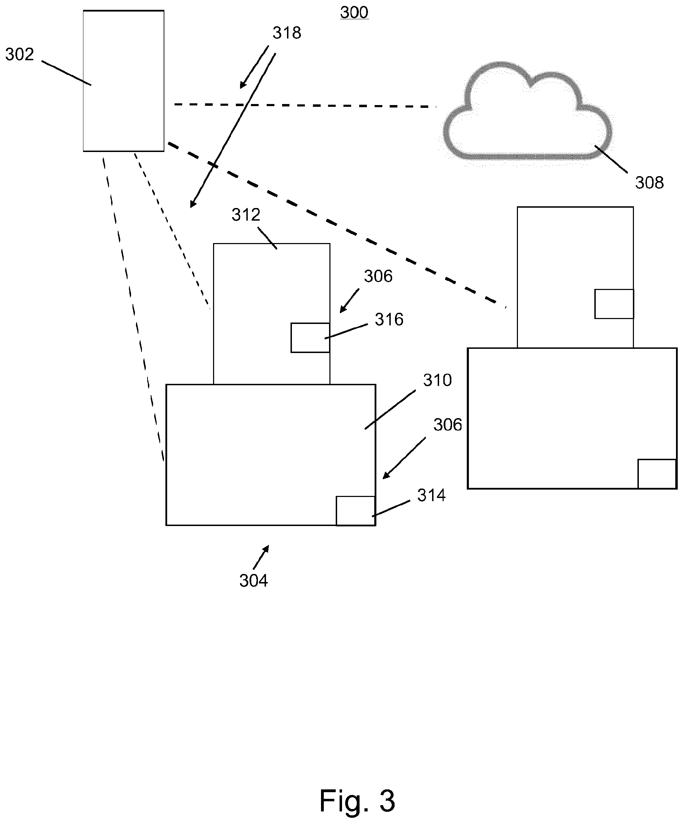

**Fig. 3** shows a schematic view of a third embodiment of an information processing system 300 according to the invention.

The third embodiment of the information processing system 300 substantially comprises the same structural and functional features as the second embodiment of the information processing system 200 according to Fig. 2.

But, the following structural differences should be discussed:
Additionally or alternatively to the connection of the terminal device 202 to the communication interface of the vehicle V (see second embodiment of Fig. 2), the terminal device 302 is also connected to the electronic air treatment device 304 via a NFC, Bluetooth or WiFi connection and suitable interfaces.

This additional wireless connection to the electronic air treatment device 304 is depicted in Fig. 3 by an additionally shown electronic air treatment device 304 that does not mean that the information processing system 300 actually comprises two electronic air treatment devices 304.

According to the normal establishment of the third embodiment, only one electronic air treatment device 304 is provided (the second one is just shown in order to show the additional wireless connection between the terminal device 302 and the electronic air treatment device 304, but it would also be possible that the two electronic air treatment devices 304 may be provided in case of a high air consumption).

Further, the first air treatment unit 310 and/or the second air treatment unit 312 is/are connectable to a data BUS system of the vehicle V.

The function of the information processing system 300 is as follows:
Particularly compared to the second embodiment, the terminal device 302 is configured to transmit the feedback information to the first storage unit 314 and/or to the second storage unit 316.

Also, the first air treatment unit 310 and/or the second air treatment unit 312 is/are further configured to transmit the feedback information to the data BUS system.

That is, via the data BUS system, the feedback information is transmittable to at least one display device arranged on at least one dashboard of the vehicle, where inter alia the paring status of the first air treatment unit 314 and the second air treatment unit 316 is shown to the driver of the vehicle V (not shown in Fig. 3).

### REFERENCE SIGNS

- 100: information processing system
- 102: terminal device, mobile terminal
- 104: electronic air treatment device
- 106: storage device
- 108: server device, cloud computing platform
- 110: first air treatment unit
- 112: second air treatment unit
- 114: first storage unit
- 116: second storage unit
- 118: wireless connection

- 200: information processing system
- 202: terminal device, mobile terminal
- 204: electronic air treatment device
- 206: storage device
- 208: server device, cloud computing platform
- 210: first air treatment unit
- 212: second air treatment unit
- 214: first storage unit
- 216: second storage unit
- 218: wireless connection

- 300: information processing system
- 302: terminal device, mobile terminal
- 304: electronic air treatment device
- 306: storage device
- 308: server device, cloud computing platform
- 310: first air treatment unit
- 312: second air treatment unit
- 314: first storage unit
- 316: second storage unit
- 318: wireless connection

- V: Vehicle

## Claims

1. An information processing system (100, 200, 300) for a vehicle (V), especially utility vehicle (V), comprising
at least one terminal device (102, 202, 302),
at least one electronic air treatment device (104, 204, 304) for providing treated and compressed air for at least one pneumatic system for the vehicle (V), wherein the electronic air treatment device (104, 204, 304) comprises at least one storage device (106, 206, 306) for storing at least one device information indicative of at least one operation condition and at least one identity of the electronic air treatment device (104, 204, 304), and
at least one internal and/or external server device (108, 208, 308),
wherein the electronic air treatment device (104, 204, 304) comprises a first air treatment unit (110, 210, 310) and a second air treatment unit (112, 212, 312) that is releasably mounted to the first air treatment unit (110, 210, 310),
wherein the at least one storage device (106, 206, 306) comprises a first storage unit (114, 214, 314) that is attached to the first air treatment unit (110, 210, 310) for storing a first unit information indicative of at least one operation condition and at least one identity of the first air treatment unit (110, 210, 310),
wherein the at least one storage device (106, 206, 306) further comprises a second storage unit (116, 216, 316) that is attached to the second air treatment unit (112, 212, 312) for storing a second unit information indicative of at least one operation condition and at least one identity of the second air treatment unit (112, 212, 312), wherein the terminal device (102, 202, 302) is configured to capture the first unit information and the second unit information and to merge the first unit information and the second unit information into the device information,
wherein the terminal device (102, 202, 302) is configured to capture the first unit information and the second unit information from the first and second storage units, wherein the terminal device (102, 202, 302) is configured to merge the first unit information and the second unit information into the device information, and to transmit said device information to the server device (108, 208, 308), or wherein the terminal device (102, 202, 302) is configured to transmit the first unit information and said second unit information to the server device (108, 208, 308) and the server device (108, 208, 308) is configured to merge the first unit information and the second unit information into the device information, and
wherein the server device (108, 208, 308) and/or the terminal device (102, 202, 302) is further configured to check said device information by comparing said device information with at least one corresponding device information of the first and second electronic air treatment devices initially stored within the server device (108, 208, 308) and/or the terminal device (102, 202, 302).

2. The information processing system (100, 200, 300) according to claim 1,
**characterized in that**
the terminal device (102, 202, 302) comprises or is formed by at least one mobile terminal device (102, 202, 302) or comprises or is formed by at least one stationary or fixed terminal device (102, 202, 302).

3. The information processing system (100, 200, 300) according to claim 1 or claim 2,
**characterized in that**
the server device (108, 208, 308) comprises or is formed by at least one cloud computing platform (108, 208, 308), client-server, dedicated-server, shared-server, host-server, external-server, internal-server, software-server, hardware-server, application-server, database-server, file-server, mail-server, print-server, proxy-server, backend-server and/or terminal-server and/or especially any other server.

4. The information processing system (100, 200, 300) according to one of claims 1 to 3,
**characterized in that**
the server device (108, 208, 308) is configured to create at least one feedback information in answer to the comparing of said device information and said corresponding device information and is further configured to transmit the feedback information to the terminal device (102, 202, 302).

5. The information processing system (100, 200, 300) according to one of claims 1 to 3 or claim 4,
**characterized in that**
the terminal device (102, 202, 302) is configured to create at least one feedback information in answer to the comparing of said device information and said corresponding device information.

6. The information processing system (100, 200, 300) according to claim 4,
**characterized in that**
the terminal device (102, 202, 302) is configured to transmit the feedback information to the first storage unit (114, 214, 314) and/or to the second storage unit (116, 216, 316).

7. The information processing system (100, 200, 300) according to claim 4 or claim 6,
**characterized in that**
the terminal device (102, 202, 302) is configured to transmit the feedback information to at least one communication interface of the vehicle (V).

8. The information processing system (100, 200, 300) according to claim 7,
**characterized in that**
the first air treatment unit (110, 210, 310) and/or the second air treatment unit (112, 212, 312) is/are connectable, via at least one wireless and/or wired connection, to at least one data BUS system of the vehicle (V) and is/are further configured to transmit the feedback information to the data BUS system.

9. The information processing system (100, 200, 300) according to claim 8,
**characterized in that**
, via the data BUS system, the feedback information is transmittable to at least one display device arranged at least one dashboard of the vehicle (V).

10. The information processing system (100, 200, 300) according to one of claims 7 to 9,
**characterized in that**
the terminal device (102, 202, 302) and/or the electronic air treatment device (104, 204, 304) and/or the server device (108, 208, 308) and/or the communication interface are connectable to each other via at least one wired and/or wireless connection (118, 218, 318).

11. The information processing system (100, 200, 300) according to claim 10,
**characterized in that**
the wireless connection (118, 218, 318) comprises at least one NFC connection and/or Bluetooth connection and/or WiFi connection and/or RFID connection.

## Patentansprüche

1. Informationsverarbeitungssystem (100, 200, 300) für ein Fahrzeug (V), insbesondere ein Nutzfahrzeug (V), das Folgendes umfasst
mindestens ein Endgerät (102, 202, 302),
mindestens eine elektronische Luftaufbereitungsvorrichtung (104, 204, 304) zum Bereitstellen von aufbereiteter und komprimierter Luft für mindestens ein pneumatisches System für das Fahrzeug (V), wobei die elektronische Luftaufbereitungsvorrichtung (104, 204, 304) mindestens eine Speichervorrichtung (106, 206, 306) zum Speichern mindestens einer Vorrichtungsinformation umfasst, die mindestens einen Betriebszustand und mindestens eine Identität der elektronischen Luftaufbereitungsvorrichtung (104, 204, 304) angibt, und
mindestens eine interne und/oder externe Servervorrichtung (108, 208, 308),
wobei die elektronische Luftaufbereitungsvorrichtung (104, 204, 304) eine erste Luftaufbereitungseinheit (110, 210, 310) und eine zweite Luftaufbereitungseinheit (112, 212, 312) umfasst, die freigebbar an der ersten Luftaufbereitungseinheit (110, 210, 310) montiert sind,
wobei die mindestens eine Speichervorrichtung (106, 206, 306) eine erste Speichereinheit (114, 214, 314) umfasst, die an der ersten Luftaufbereitungseinheit (110, 210, 310) angebracht ist, um eine Information der ersten Einheit zu speichern, die mindestens einen Betriebszustand und mindestens eine Identität der ersten Luftaufbereitungseinheit (110, 210, 310) angibt,
wobei die mindestens eine Speichervorrichtung (106, 206, 306) weiter eine zweite Speichereinheit (116, 216, 316) umfasst, die an der zweiten Luftaufbereitungseinheit (112, 212, 312) zum Speichern Informationen der zweiten Einheit angebracht ist, die mindestens einen Betriebszustand und mindestens eine Identität der zweiten Luftaufbereitungseinheit (112, 212, 312) angeben, wobei das Endgerät (102, 202, 302) dazu konfiguriert ist, die Informationen der ersten Einheit und die Informationen der zweiten Einheit aufzunehmen und die Informationen der ersten Einheit und die Informationen der zweiten Einheit in die Vorrichtungsinformationen zusammenzuführen,
wobei das Endgerät (102, 202, 302) dazu konfiguriert ist, die Informationen der ersten Einheit und die Informationen der zweiten Einheit von der ersten und der zweiten Speichereinheit aufzunehmen, wobei das Endgerät (102, 202, 302) dazu konfiguriert ist, die Informationen der ersten Einheit und die Informationen der zweiten Einheit in die Vorrichtungsinformationen zusammenzuführen und die Vorrichtungsinformationen an die Servervorrichtung (108, 208, 308) zu übertragen, oder wobei das Endgerät (102, 202, 302) dazu konfiguriert ist, die Informationen der ersten Einheit und Informationen der zweiten Einheit an die Servervorrichtung (108, 208, 308) zu übertragen, und die Servervorrichtung (108, 208, 308) dazu konfiguriert ist, die Informationen der ersten Einheit und die Informationen der zweiten Einheit in die Vorrichtungsinformationen zusammenzuführen, und
wobei die Servervorrichtung (108, 208, 308) und/oder das Endgerät (102, 202, 302) weiter dazu konfiguriert ist, die Vorrichtungsinformationen durch Vergleichen der Vorrichtungsinformationen mit mindestens einer entsprechenden Vorrichtungsinformationen der ersten und der zweiten elektronischen Luftaufbereitungsvorrichtung zu vergleichen, die anfänglich auf der Servervorrichtung (108, 208, 308) und/oder dem Endgerät (102, 202, 302) gespeichert werden.

2. Informationsverarbeitungssystem (100, 200, 300) nach Anspruch 1,
**dadurch gekennzeichnet, dass**
das Endgerät (102, 202, 302) mindestens ein mobiles Endgerät (102, 202, 302) umfasst oder daraus gebildet ist, oder mindestens ein stationäres oder festes Endgerät (102, 202, 302) umfasst oder daraus gebildet ist.

3. Informationsverarbeitungssystem (100, 200, 300) nach Anspruch 1 oder Anspruch 2,
**dadurch gekennzeichnet, dass**
die Servervorrichtung (108, 208, 308) mindestens eine Cloud-Computing-Plattform (108, 208, 308), einen Client-Server, einen dedizierten Server, einen Shared Server, einen Host-Server, einen externen Server, einen internen Server, einen Software-Server, einen Hardware-Server, einen Anwendungsserver, einen Datenbankserver, einen Dateiserver, einen Mailserver, einen Druckserver, einen Proxy-Server oder einen Backend-Server und/oder Endgerätserver oder insbesondere einen beliebigen anderen Server umfasst oder daraus gebildet ist.

4. Informationsverarbeitungssystem (100, 200, 300) nach einem der Ansprüche 1 bis 3,
**dadurch gekennzeichnet, dass**
die Servervorrichtung (108, 208, 308) dazu konfiguriert ist, mindestens eine Rückmeldeinformation als Antwort auf das Vergleichen der Vorrichtungsinformationen mit den entsprechenden Vorrichtungsinformationen zu erzeugen und diese Rückmeldeinformation an das Endgerät (102, 202, 302) zu übertragen.

5. Informationsverarbeitungssystem (100, 200, 300) nach einem der Ansprüche 1 bis 3 oder nach Anspruch 4,
**dadurch gekennzeichnet, dass**
das Endgerät (102, 202, 302) dazu konfiguriert ist, mindestens eine Rückmeldeinformation als Antwort auf das Vergleichen der Vorrichtungsinformationen mit den entsprechenden Vorrichtungsinformationen zu erzeugen.

6. Informationsverarbeitungssystem (100, 200, 300) nach Anspruch 4,
**dadurch gekennzeichnet, dass**
das Endgerät (102, 202, 302) dazu konfiguriert ist, die Rückmeldeinformationen an die erste Speichereinheit (114, 214, 314) und/oder an die zweite Speichereinheit (116, 216, 316) zu übertragen.

7. Informationsverarbeitungssystem (100, 200, 300) nach Anspruch 4 oder Anspruch 6,
**dadurch gekennzeichnet, dass**
das Endgerät (102, 202, 302) dazu konfiguriert ist, die Rückmeldeinformationen an mindestens eine Kommunikationsschnittstelle des Fahrzeugs (V) zu übertragen.

8. Informationsverarbeitungssystem (100, 200, 300) nach Anspruch 7,
**dadurch gekennzeichnet, dass**
die erste Luftaufbereitungseinheit (110, 210, 310) und/oder die zweite Luftaufbereitungseinheit (112, 212, 312) über mindestens eine drahtlose und/oder eine drahtgebundene Verbindung mit mindestens einem Datenbussystem des Fahrzeugs (V) verbindbar ist/sind, und weiter dazu konfiguriert ist/sind, die Rückmeldeinformationen an das Datenbussystem zu übertragen.

9. Informationsverarbeitungssystem (100, 200, 300) nach Anspruch 8,
**dadurch gekennzeichnet, dass**
über das Datenbussystem die Rückmeldeinformationen an mindestens eine Anzeigevorrichtung übertragbar sind, die auf mindestens einem Armaturenbrett des Fahrzeugs (V) eingerichtet ist.

10. Informationsverarbeitungssystem (100, 200, 300) nach einem der Ansprüche 7 bis 9,
**dadurch gekennzeichnet, dass**
das Endgerät (102, 202, 302) und/oder die elektronische Luftbehandlungsvorrichtung (104, 204, 304) und/oder die Servervorrichtung (108, 208, 308) und/oder die Kommunikationsschnittstelle miteinander über mindestens eine drahtgebundene und/oder drahtlose Verbindung (118, 218, 318) verbindbar sind.

11. Informationsverarbeitungssystem (100, 200, 300) nach Anspruch 10,
**dadurch gekennzeichnet, dass**
die drahtlose Verbindung (118, 218, 318) mindestens eine NFC-Verbindung und/oder Bluetooth-Verbindung und/oder WLAN-Verbindung und/oder RFID-Verbindung umfasst.

## Revendications

1. Système de traitement de l'information (100, 200, 300) pour un véhicule (V), notamment un véhicule utilitaire (V), comprenant
au moins un dispositif terminal (102, 202, 302),
au moins un dispositif électronique de traitement de l'air (104, 204, 304) destiné à fournir de l'air traité et comprimé à au moins un système pneumatique du véhicule (V), dans lequel ledit dispositif électronique de traitement de l'air (104, 204, 304) comprend au moins un dispositif de stockage (106, 206, 306) permettant de stocker au moins une information sur le dispositif relative à au moins une condition de fonctionnement et à au moins une identité du dispositif électronique de traitement de l'air (104, 204, 304), et
au moins un dispositif serveur interne et/ou externe (108, 208, 308),
dans lequel le dispositif électronique de traitement de l'air (104, 204, 304) comprend une première unité de traitement de l'air (110, 210, 310) et une deuxième unité de traitement de l'air (112, 212, 312) qui est montée de manière amovible sur la première unité de traitement de l'air (110, 210, 310),
dans lequel le au moins un dispositif de stockage (106, 206, 306) comprend une première unité de stockage (114, 214, 314) qui est fixée à la première unité de traitement d'air (110, 210, 310) pour stocker des informations sur une première unité indiquant au moins une condition de fonctionnement et au moins une identité de la première unité de traitement d'air (110, 210, 310),
dans lequel le au moins un dispositif de stockage (106, 206, 306) comprend en outre une deuxième unité de stockage (116, 216, 316) fixée à la deuxième unité de traitement d'air (112, 212, 312) pour stocker des informations sur la deuxième unité indiquant au moins une condition de fonctionnement et au moins une identité de la deuxième unité de traitement d'air (112, 212, 312), dans lequel le dispositif terminal (102, 202, 302) est configuré pour capturer les informations de la première unité et celles de la deuxième unité et pour fusionner les informations de la première unité et les informations de la deuxième unité dans les informations du dispositif,
dans lequel le dispositif terminal (102, 202, 302) est configuré pour capturer les informations de la première et de la deuxième unité à partir des première et deuxième unités de stockage, dans lequel le dispositif terminal (102, 202, 302) est configuré pour fusionner les informations de la première et de la deuxième unité en informations du dispositif, et pour transmettre lesdites informations de dispositif au dispositif serveur (108, 208, 308), ou dans lequel le dispositif terminal (102, 202, 302) est configuré pour transmettre les informations de la première et de la deuxième unité au dispositif serveur (108, 208, 308) et le dispositif serveur (108, 208, 308) est configuré pour fusionner les informations de la première et de la deuxième unité en informations de dispositif, et
dans lequel le dispositif serveur (108, 208, 308) et/ou le dispositif terminal (102, 202, 302) est en outre configuré pour vérifier lesdites informations du dispositif en comparant lesdites informations du dispositif avec au moins une information correspondante des premier et deuxième dispositifs électroniques de traitement de l'air initialement stockée dans le dispositif serveur (108, 208, 308) et/ou dans le dispositif terminal (102, 202, 302).

2. Système de traitement de l'information (100, 200, 300) selon la revendication 1,
**caractérisé en ce que**
le dispositif terminal (102, 202, 302) comprend ou est formé par au moins un dispositif terminal mobile (102, 202, 302) ou comprend ou est formé par au moins un dispositif terminal stationnaire ou fixe (102, 202, 302).

3. Système de traitement de l'information (100, 200, 300) selon la revendication 1 ou la revendication 2,
**caractérisé en ce que**
le dispositif serveur (108, 208, 308) comprend ou est constitué d'au moins une plateforme d'informatique en nuage (108, 208, 308), un serveur client, un serveur dédié, un serveur partagé, un serveur hôte, un serveur externe, un serveur interne, un serveur logiciel, un serveur matériel, un serveur d'applications, un serveur de base de données, un serveur de fichiers, un serveur de messagerie, un serveur d'impression, un serveur proxy ou un serveur backend et/ou un serveur terminal et/ou en particulier tout autre serveur.

4. Système de traitement de l'information (100, 200, 300) selon l'une des revendications 1 à 3,
**caractérisé en ce que**
Le dispositif serveur (108, 208, 308) est configuré pour créer au moins une information de retour en réponse à la comparaison desdites informations du dispositif et desdites informations correspondantes du dispositif et est en outre configuré pour transmettre l'information de retour au dispositif terminal (102, 202, 302).

5. Système de traitement de l'information (100, 200, 300) selon l'une des revendications 1 à 3 ou la revendication 4,
**caractérisé en ce que**
le dispositif terminal (102, 202, 302) est configuré pour créer au moins une information de retour en réponse à la comparaison desdites informations du dispositif et desdites informations correspondantes du dispositif.

6. Système de traitement de l'information (100, 200, 300) selon la revendication 4,
**caractérisé en ce que**
le dispositif terminal (102, 202, 302) est configuré pour transmettre les informations de retour à la première unité de stockage (114, 214, 314). et/ou à la deuxième unité de stockage (116, 216, 316).

7. Système de traitement de l'information (100, 200, 300) selon la revendication 4 ou la revendication 6,
**caractérisé en ce que**
le dispositif terminal (102, 202, 302) est configuré pour transmettre les informations de retour à au moins une interface de communication du véhicule (V).

8. Système de traitement de l'information (100, 200, 300) selon la revendication 7,
**caractérisé en ce que**
la première unité de traitement de l'air (110, 210, 310) et/ou la deuxième unité de traitement de l'air (112, 212, 312) est/sont connectable(s), via au moins une connexion sans fil et/ou une connexion filaire, à au moins un système de bus de données du véhicule (V) et est/sont configuré(s) en outre pour transmettre les informations de retour au système de bus de données.

9. Système de traitement de l'information (100, 200, 300) selon la revendication 8,
**caractérisé en ce que**
, via le système de bus de données, les informations de retour sont transmissibles à au moins un dispositif d'affichage agencé sur au moins un tableau de bord du véhicule (V).

10. Système de traitement de l'information (100, 200, 300) selon l'une des revendications 7 à 9,
**caractérisé en ce que**
le dispositif terminal (102, 202, 302) et/ou le dispositif électronique de traitement de l'air (104, 204, 304) et/ou le dispositif serveur (108, 208, 308) et/ou l'interface de communication peuvent être connectés entre eux via au moins un câble et/ou via une connexion sans fil (118, 218, 318).

11. Système de traitement de l'information (100, 200, 300) selon la revendication 10,
**caractérisé en ce que**
la connexion sans fil (118, 218, 318) comprend au moins une connexion NFC et/ou une connexion Bluetooth et/ou une connexion WiFi et/ou une connexion RFID.
